# FASCICULE DE BREVET EUROPEEN

(11) **EP 4 206 435 B1**
(45) Date de publication et mention de la délivrance du brevet: **25.09.2024**
(21) Numéro de dépôt: 22217030.0
(22) Date de dépôt: 28.12.2022
(51) Int. Cl.: E06B 9/68, H02J 9/00

(54) **DISPOSITIF D'ALIMENTATION ÉLECTRIQUE POUR UN SYSTÈME DE CHARGES ÉLECTRIQUES**
STROMVERSORGUNGSVORRICHTUNG FÜR EIN ELEKTRISCHES LADESYSTEM
POWER SUPPLY DEVICE FOR AN ELECTRICAL LOAD SYSTEM

(30) Priorité: 30.12.2021 FR 2114696
(43) Date de publication de la demande: 05.07.2023
(73) Titulaire: SOMFY ACTIVITES SA, 74300 Cluses (FR)
(72) Inventeur: SAURIN, Lionel, 74300 CLUSES (FR); MOLINIER, Jérôme, 74300 CLUSES (FR)
(74) Mandataire: Lavoix

(56) Documents cités:
- WO-A1-2020/165399
- FR-A1- 2 919 125
- FR-A1- 2 932 617

## Description

La présente invention concerne un dispositif d'alimentation électrique pour un système de charges électriques.

De manière générale, la présente invention est applicable au domaine des systèmes de charges électriques tels qu'une alarme domestique ou une installation de fermeture, d'occultation ou de protection solaire comprenant un tel dispositif d'alimentation électrique.

Concernant les dispositifs d'occultation comprenant un dispositif d'entraînement motorisé mettant en mouvement un écran entre au moins une première position et au moins une deuxième position, ceux-ci comportent un dispositif d'entraînement motorisé qui comprend un actionneur électromécanique d'un élément mobile de fermeture, d'occultation ou de protection solaire tel qu'un volet, une porte, une grille, un store ou tout autre matériel équivalent, appelé par la suite écran.

On connaît également des alarmes domestiques, qui comportent une centrale d'alarme connectée à des capteurs (détecteurs de présence, capteurs d'ouverture d'un ouvrant, et bien d'autres exemples encore) et à un ou plusieurs avertisseurs (sirène d'alarme, avertisseur lumineux, et bien d'autres exemples encore).

Les systèmes de charges électriques connus comportent ainsi des charges électriques de types différents, qui possèdent des besoins en alimentation électrique eux aussi différents.

On distingue par exemple un premier ensemble de charges électriques, telles qu'un actionneur électromécanique ou une sirène d'alarme domestique, qui nécessitent d'être alimentées avec une première tension électrique, généralement égale à 24 Volts, ou plus.

On distingue également un deuxième ensemble de charges électriques, telles que des modules électroniques assurant des fonctions de commande et/ou de communication nécessitent d'être alimentés avec une deuxième tension électrique.

La deuxième tension électrique est généralement inférieure à la première tension électrique. La deuxième tension électrique doit aussi être stable et présenter des caractéristiques bien spécifiques. La deuxième tension électrique est généralement égale à 5 Volts continu, ou à 3,3 Volts continu.

Les systèmes de charges électriques connus comportent à cet effet un dispositif d'alimentation électrique capable de fournir ces deux tensions électriques à partir d'une ou de plusieurs tensions électriques d'entrée(s) fournie(s) par une ou par plusieurs sources d'alimentation électrique.

Par exemple, le dispositif d'alimentation électrique peut être principalement alimenté par une tension alternative réseau (secteur) et posséder une alimentation de secours, telle qu'une batterie, permettant au système de charges électriques de fonctionner au moins temporairement en mode dégradé en cas d'interruption de l'alimentation secteur.

Ces dispositifs d'alimentation électrique ont pour inconvénient que leur consommation électrique est trop élevée lorsque le système domotique est dans un mode de veille. La publication FR2919125 porte sur l'optimisation du rendement énergétique global d'un actionneur.

Par exemple, dans ce mode de veille, les premières charges électriques du premier ensemble de charges électriques sont déconnectées du dispositif d'alimentation, car inutilisées, mais les deuxièmes charges électriques du deuxième ensemble de charges électriques continuent à être alimentées pour maintenir des fonctions de pilotage et/ou de communication du système de charges électriques. Alors, des éléments du dispositif d'alimentation électrique, tel qu'un convertisseur de puissance ou un régulateur de tension, continuent à être alimentés par la tension réseau, ce qui engendre des pertes énergétiques et conduit à une consommation électrique trop élevée.

Il existe donc un besoin pour un dispositif d'alimentation électrique pour un système de charges électriques dont le rendement énergétique soit satisfaisant et dont la consommation électrique dans un mode de veille reste faible, par exemple inférieure à 0,5 Watt.

Il est cependant primordial que de tels dispositifs d'alimentation électrique restent simples et peu coûteux à produire.

La présente invention a pour but de résoudre les inconvénients précités et de proposer un dispositif d'alimentation électrique pour alimenter électriquement un système de charges électriques, le dispositif d'alimentation électrique comprenant au moins :
- une première source d'alimentation électrique, la première source d'alimentation électrique fournissant une première tension électrique d'entrée ;
- une deuxième source d'alimentation électrique, la deuxième source d'alimentation électrique fournissant une deuxième tension électrique d'entrée, la deuxième tension électrique d'entrée étant inférieure à la première tension électrique ;
- une troisième source d'alimentation électrique, la troisième source d'alimentation électrique fournissant une troisième tension électrique d'entrée, la troisième tension électrique d'entrée étant inférieure à la deuxième tension électrique d'entrée ;
- une première entrée, la première entrée étant raccordée électriquement à la première source d'alimentation électrique ;
- une deuxième entrée, la deuxième entrée étant raccordée électriquement à la deuxième source d'alimentation électrique ;
- une troisième entrée, la troisième entrée étant raccordée électriquement à la troisième source d'alimentation électrique ;
- une première sortie, la première sortie étant raccordée électriquement d'une part à la première entrée et d'autre part à la deuxième entrée, la première sortie étant configurée pour alimenter électriquement une première partie du système de charges électriques avec une première tension électrique de sortie fournie par la première entrée ou par la deuxième entrée ;
- une diode de protection, la diode de protection étant raccordée électriquement d'une part à la première entrée et d'autre part à la deuxième entrée ;
- une deuxième sortie, la deuxième sortie étant configurée pour alimenter électriquement une deuxième partie du système de charges électriques avec une deuxième tension électrique de sortie, la deuxième tension électrique de sortie étant inférieure à la troisième tension électrique d'entrée ;
- un premier régulateur de tension, une entrée du premier régulateur de tension étant raccordée à la deuxième entrée, la troisième entrée étant raccordée électriquement à une sortie du premier régulateur de tension, et
- un deuxième régulateur de tension, une entrée du deuxième régulateur de tension étant raccordée électriquement à la sortie du premier régulateur de tension, une sortie du deuxième régulateur de tension étant raccordée électriquement à la deuxième sortie pour alimenter électriquement la deuxième partie du système de charges électriques.

Selon une caractéristique avantageuse de l'invention :
- le dispositif d'alimentation électrique est dépourvu de raccordement entre la première sortie et l'entrée du premier régulateur de tension ;
- le dispositif d'alimentation électrique comporte une réserve d'énergie connectée entre l'entrée du premier régulateur de tension et une masse électrique du dispositif d'alimentation électrique ;
- l'entrée du premier régulateur de tension est connectée à la première sortie au moyen d'une connexion comportant une diode additionnelle ;
- l'alimentation auxiliaire comporte une quatrième entrée distincte de la troisième entrée et recevant une tension électrique qui est supérieure à la troisième tension d'entrée reçue sur la troisième entrée, dans lequel l'entrée du premier régulateur de tension est connectée à la quatrième entrée par l'intermédiaire d'une diode additionnelle ;
- le dispositif d'alimentation électrique comporte une troisième sortie configurée pour alimenter électriquement un ou plusieurs éléments de la deuxième partie du système domotique, dans lequel le dispositif d'alimentation électrique comporte un troisième régulateur de tension dont la sortie est raccordée à la deuxième sortie du dispositif d'alimentation électrique et dont l'entrée est raccordée à la sortie du premier régulateur de tension ;
- le premier régulateur de tension est configuré pour fournir à sa sortie une tension électrique régulée à une valeur de consigne, la valeur de consigne étant choisie inférieure à la troisième tension électrique d'entrée;
- les régulateurs de tension sont des régulateurs de tension linéaires.

Selon un autre aspect, l'invention concerne un système domotique, comprenant un système de charges électriques et au moins un dispositif d'alimentation électrique tel que défini.

Selon un autre aspect, le système domotique est une installation de fermeture, d'occultation ou de protection solaire comprenant un écran entraîné en déplacement par un actionneur électromécanique alimenté électriquement par le dispositif d'alimentation électrique.

L'invention sera mieux comprise et d'autres avantages de celle-ci apparaîtront plus clairement à la lumière de la description qui va suivre, donnée uniquement à titre d'exemple et faite en référence aux dessins annexés, dans lesquels :
La figure 1 est une vue schématique d'une installation domotique conforme à un mode de réalisation de l'invention ;
La figure 2 est une représentation schématique d'un dispositif d'alimentation électrique pour un actionneur électromécanique de l'installation illustrée à la figure 1 selon un premier mode de réalisation ;
La figure 3 est une représentation schématique d'un dispositif d'alimentation électrique pour un actionneur électromécanique de l'installation illustrée à la figure 1 selon un deuxième mode de réalisation ;
La figure 4 est une représentation schématique d'un dispositif d'alimentation électrique pour un actionneur électromécanique de l'installation illustrée à la figure 1 selon un troisième mode de réalisation.

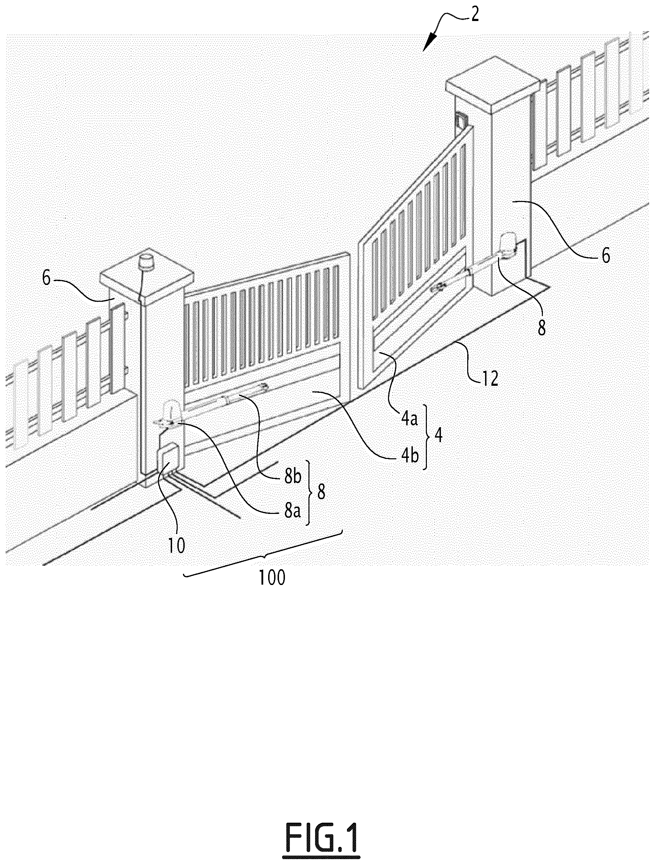

On décrit tout d'abord, en référence à la figure 1, une installation de fermeture 2 comprenant un système de charges électriques 100 selon un mode de réalisation choisi pour illustrer l'invention. Dans le mode de réalisation choisi pour illustrer l'invention, le système de charges électriques 100 est un dispositif d'entraînement motorisé 100 comprenant deux actionneurs électromécaniques 8 et une unité électronique de contrôle 10 configurée pour contrôler les deux actionneurs électromécaniques 8.

On comprend cependant que l'invention n'est pas limitée au domaine des actionneurs électromécaniques. Dans de nombreux autres modes de réalisation, le système de charges électriques 100 pourrait être différent. Il pourrait s'agir, par exemple, d'une centrale d'alarme domestique, comprenant un ou plusieurs capteurs et un ou plusieurs dispositif(s) d'avertissement et/ou dispositifs de communication. De nombreuses autres applications sont possibles.

De façon générale, l'installation de fermeture 2 comprend au moins un écran 4a, 4b, tel qu'un vantail de portail, pour fermer sélectivement une ouverture.

L'invention va être décrite en référence à un vantail de portail, mais en variante d'autres modes de réalisation pourraient être envisagés pour accommoder des ouvertures de nature différente, par exemple avec des écrans de nature différente.

Par exemple, l'invention pourrait être utilisée pour déplacer au moins un volet battant servant à fermer une fenêtre d'un bâtiment.

Même si ces exemples alternatifs ne sont pas décrits ni illustrés dans un souci de concision, on comprend néanmoins que l'enseignement donné en référence au mode de réalisation décrit ci-après est transposable à ces exemples alternatifs.

Dans l'exemple illustré par la figure 1, l'installation de fermeture 2 comprend un portail battant 4 monté sur un support fixe 6 constitué de piliers, et un dispositif d'entraînement motorisé.

Le portail battant 4 est installé au niveau d'une ouverture réalisée dans une clôture, de sorte que le portail battant 4 permet d'obturer sélectivement l'ouverture réalisée dans la clôture.

En variante, l'ouverture est réalisée dans un bâtiment ou une enceinte.

Le portail battant 4 de l'installation de fermeture 2 est une barrière mobile par rotation verticale.

Le dispositif d'entraînement motorisé comprend un actionneur électromécanique 8, en particulier de type linéaire, d'autres types d'actionneurs électromécaniques pouvant cependant être utilisés.

Le portail battant 4 comprend au moins un écran 4a, 4b.

Dans l'exemple illustré, le portail 4 comprend deux écrans 4a et 4b qui sont de préférence montés symétriquement. Un actionneur électromécanique 8 est associé à chaque écran 4a, 4b.

Ici, chaque écran 4a, 4b est monté oscillant, autrement dit pivotant, autour d'un arbre de rotation vertical ou au moins essentiellement vertical, c'est-à-dire que chaque écran est mobile en rotation autour dudit arbre de rotation.

Par exemple, l'arbre de rotation est monté verticalement le long d'un des montants 6, qui peuvent être des piliers maçonnés, cet exemple étant donné à titre d'illustration.

En outre, l'actionneur électromécanique 8 est configuré pour déplacer l'écran 4a, 4b correspondant du portail battant 4.

Ainsi, l'écran 4a, 4b du portail battant 4 est entraîné en déplacement par le dispositif d'entraînement motorisé et, plus particulièrement, par l'actionneur électromécanique 8 correspondant.

Dans l'exemple illustré, le dispositif d'entraînement motorisé comprend deux actionneurs électromécaniques 8, chacun étant associé à un écran 4a, 4b du portail.

En pratique, le dispositif d'entraînement motorisé peut donc comprendre plusieurs actionneurs électromécaniques 8.

Le dispositif d'entraînement motorisé met en mouvement l'écran 4a, 4b du portail battant 4 entre au moins une première position et au moins une deuxième position, correspondant respectivement à une position fermée et à une position ouverte.

Dans ce mode de réalisation, chaque écran 4a, 4b est un élément mobile de fermeture, tel qu'un portail, une grille ou tout autre matériel équivalent.

L'actionneur électromécanique 8 comprend un membre fixe 8a relié à la clôture et un membre mobile 8b relié à l'écran 4a, 4b.

L'écran 4a, 4b est entraîné par l'actionneur électromécanique 8 et est mobile entre la position ouverte et la position fermée.

L'actionneur électromécanique 8 du dispositif d'entraînement motorisé comprend au moins un carter, un moteur électrique et un système de transmission de mouvement non représentés.

Le portail battant 4 de l'installation de fermeture 2, en particulier l'écran 4a, 4b, est entraîné par l'actionneur électromécanique 8 et mobile entre la première position, fermée, et la deuxième position, ouverte.

Par exemple, l'actionneur électromécanique 8 correspond à l'un des actionneurs électromécaniques linéaires décrits dans le brevet FR 3 068 063 B1, d'autres exemples de réalisation étant néanmoins possibles.

En variante, par exemple, l'actionneur électromécanique 8 peut être un actionneur électromécanique à bras rotatif, dans lequel le moteur électrique serait disposé avec un axe de rotation orienté verticalement.

Le dispositif d'entraînement motorisé comprend une unité électronique de contrôle 10.

L'actionneur électromécanique 8 est commandé par l'unité électronique de contrôle 10 du dispositif d'entraînement motorisé.

En pratique, l'unité électronique de contrôle 10 du dispositif d'entraînement motorisé peut être connectée aux actionneurs électroniques 8 par l'intermédiaire de conducteurs électriques 12, tels que des câbles électriques.

L'unité électronique de contrôle 10, aussi nommée «dispositif électronique de contrôle », comprend généralement un boîtier qui peut être installé dans l'installation de fermeture 2, par exemple fixé au pied d'un des piliers 6 comme dans l'exemple illustratif et non limitatif présenté dans la figure 1, étant entendu que de multiples autres configurations d'installation de fermeture 2 sont possibles en variante.

Dans de nombreux modes de réalisation, l'unité électronique de contrôle 10 du dispositif d'entraînement motorisé est implémentée par un ou par plusieurs circuits électroniques.

Par exemple, l'unité électronique de contrôle 10 comprend un processeur, tel qu'un microcontrôleur programmable ou un microprocesseur.

Le processeur est couplé à une mémoire informatique, ou à tout support d'enregistrement de données lisible par ordinateur, qui comprend des instructions exécutables et/ou un code logiciel prévu pour mettre en oeuvre un procédé de pilotage du dispositif d'entraînement motorisé lorsque ces instructions sont exécutées par le processeur.

L'emploi du terme processeur ne fait toutefois pas obstacle à ce que, en variante, au moins une partie des fonctions du dispositif soient réalisées par d'autres composants électroniques, tels qu'un processeur de traitement du signal (DSP), ou un composant logique reprogrammable (FPGA), ou un circuit intégré spécialisé (ASIC), ou tout élément équivalent, ou toute combinaison de ces éléments.

L'unité électronique de contrôle 10 du dispositif d'entraînement motorisé est apte à mettre en fonctionnement le moteur électrique de l'actionneur électromécanique 8 et, en particulier, permettre l'alimentation en énergie électrique du moteur électrique.

Ainsi, l'unité électronique de contrôle 10 du dispositif d'entraînement motorisé commande, notamment, le moteur électrique, de sorte à ouvrir ou fermer l'écran 4a, 4b du portail battant 4.

Dans un mode de réalisation, le dispositif d'entraînement motorisé comprend également une interface de commande, non représentée. L'interface de commande est reliée fonctionnellement à l'unité électronique de contrôle 10. A titre d'exemple nullement limitatif, l'interface de commande est intégrée dans le boîtier de l'unité électronique de contrôle 10.

En variante, l'interface de commande peut être installée de façon déportée, cet autre boîtier étant alors être relié à l'unité électronique de contrôle 10 par une ou plusieurs liaisons filaires et/ou non filaires, telles que des moyens de communications sans fils, par exemple des moyens de communication radiofréquence.

Pour une installation comprenant des actionneurs électromécaniques 8 linéaires, l'unité électronique de contrôle 10 est avantageusement localisée dans un boîtier externe aux actionneurs électromécaniques 8.

En variante, dans le cas d'une installation de fermeture 2 comprenant des actionneurs électromécaniques à bras articulés, l'unité électronique de contrôle 10 peut être avantageusement localisée à l'intérieur d'un des actionneurs électromécaniques 8.

De préférence, l'interface de commande comprend un clavier de commande pourvu d'éléments de sélection et, éventuellement, d'éléments d'affichage.

A titre d'exemples nullement limitatifs, les éléments de sélection peuvent être des boutons poussoirs ou des touches sensitives, les éléments d'affichage pouvant être des diodes électroluminescentes, et/ou un écran d'affichage électronique, par exemple un écran à cristaux liquides (LCD) ou un écran à diodes électroluminescentes organiques (OLED) ou toute technologie d'affichage appropriée.

L'interface de commande permet à un utilisateur de régler des paramètres et/ou de commander le dispositif d'entraînement motorisé et, en particulier, de commander l'actionneur électromécanique 8 associé au portail battant 4, par un appui sur ou interaction avec l'un des éléments de sélection de l'interface de commande.

Dans des modes de réalisation optionnels mais néanmoins avantageux, l'interface de commande peut comprendre, par exemple, une unité de commande locale, notamment une télécommande.

L'unité de commande locale peut être reliée, en liaison filaire ou non filaire, avec une unité de commande centrale.

L'unité électronique de contrôle 10 et le cas échéant, l'unité de commande locale ou l'unité de commande centrale peut (peuvent) alors être en communication avec une station météorologique située sur ou à proximité d'un terrain délimité par la clôture et incluant, notamment, un ou plusieurs capteurs pouvant être configurés pour déterminer, par exemple, une température, une vitesse de vent ou encore une luminosité.

Lorsque l'ouverture est ménagée dans une enceinte ou un bâtiment, cette station météorologique est déportée à l'extérieur de cette enceinte ou de ce bâtiment.

Le cas échéant, dans ces modes de réalisation, l'unité de commande centrale peut également être en communication avec un serveur informatique distant, de sorte à contrôler le dispositif d'entraînement motorisé suivant des données mises à disposition à distance par l'intermédiaire d'un réseau de communication, en particulier un réseau internet pouvant être relié au serveur informatique distant.

L'unité électronique de contrôle 10 peut également, de façon optionnelle, comprendre un module de réception d'ordres, en particulier d'ordres radioélectriques émis par un émetteur d'ordres, tel que ladite télécommande destinée à commander l'actionneur électromécanique 8.

Le module de réception d'ordres peut également permettre la réception d'ordres transmis par des moyens filaires.

Le dispositif d'entraînement motorisé est configuré pour exécuter les commandes d'ouverture ou de fermeture du portail battant 4 de l'installation de fermeture 2, pouvant être émises par l'interface de commande.

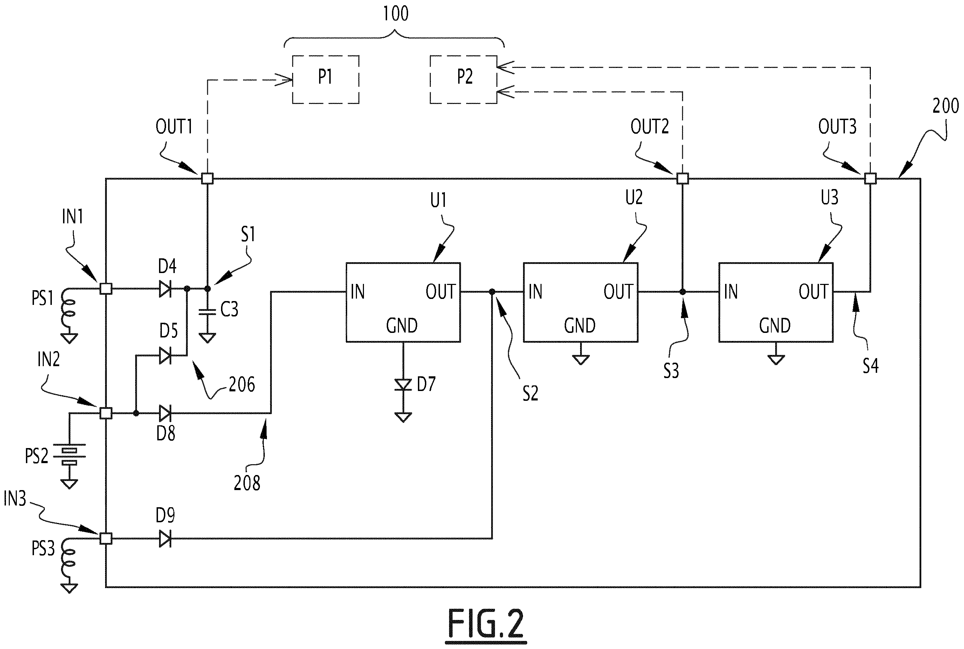

On décrit à présent, en référence à la figure 2, un dispositif d'alimentation électrique 200 selon un mode de réalisation de l'invention. Le dispositif d'alimentation électrique 200 est configuré pour alimenter en énergie électrique un système de charges électriques 100.

Dans le cas où le système de charges électriques 100 est le dispositif d'entrainement motorisé 100 de l'installation de fermeture 2, alors le dispositif d'alimentation électrique 200 est configuré pour alimenter en énergie électrique l'actionneur électromécanique 8, par exemple en alimentant l'unité électronique de contrôle 10 et en pilotant ou en régulant la tension d'alimentation fournie en entrée du moteur électrique. Ici, le moteur électrique est de type à courant continu (moteur DC de l'anglais "Direct Current"). En variante de cet exemple, le moteur électrique peut être de type sans balais à commutation électronique, appelé également BLDC (acronyme du terme anglais « BrushLess Direct Current ») ou un moteur synchrone à aimants permanents.

Selon des exemples d'implémentation, le dispositif d'alimentation électrique 200 peut être associé à l'unité électronique de contrôle 10, ou être compris dans l'unité électronique de contrôle 10, ou n'être qu'un élément ou un sous-ensemble d'un circuit d'alimentation électrique de l'actionneur électromécanique 8. Par exemple, le dispositif d'alimentation électrique 200 est logé dans le boîtier de l'unité électronique de contrôle 10.

D'autres modes de réalisation sont possibles en fonction de la nature précise du système de charges électriques 100.

Le dispositif d'alimentation électrique 200 comprend une première sortie OUT1 configurée pour alimenter électriquement une première partie P1 du système de charges électriques 100 et une deuxième sortie OUT2 configurée pour alimenter électriquement une deuxième partie P2 du système de charges électriques 100.

La première partie P1 du système de charges électriques 100 correspond par exemple à un premier ensemble de charges électriques, en particulier un ensemble de charges électriques dites de haute puissance, telles qu'un actionneur électrique 8 ou une sirène d'alarme domestique, ou autre selon la nature du système de charges électriques 100, qui nécessitent d'être alimentées avec une première tension électrique de sortie VOUT1 .

La deuxième partie P2 du système de charges électriques 100 correspond par exemple à un deuxième ensemble de charges électriques, en particulier un ensemble de charges électriques dites de basse puissance, telles que des modules électroniques assurant des fonctions de commande et/ou de communication, ou autre selon la nature du système de charges électriques 100, qui nécessitent d'être alimentés avec une deuxième tension électrique de sortie VOUT2 différente de la première tension électrique de sortie VOUT1, la deuxième tension électrique de sortie VOUT2 étant en particulier inférieure à la première tension électrique de sortie VOUT1.

Par exemple, la première tension électrique de sortie VOUT1 est égale à 24 Volts DC (continu) et la deuxième tension électrique de sortie VOUT2 est égale à 5 Volts DC (continu).

La deuxième tension électrique de sortie VOUT2 peut également présenter des caractéristiques spécifiques, par exemple être stabilisée.

Dans le sens de l'invention, un actionneur électromécanique fait référence indifféremment à un système de charges électriques ou à une partie du système de charges électriques.

Dans cette description, sauf précision contraire, toute référence à une tension électrique en un point du circuit du dispositif d'alimentation électrique 200 désigne une tension électrique entre ce point et la masse électrique GND.

Le dispositif d'alimentation électrique 200 est par exemple configuré pour pouvoir fonctionner entre plusieurs modes de fonctionnement différents, notamment :
- un mode de fonctionnement normal,
- un mode de fonctionnement dit de veille,
- un mode de fonctionnement dégradé suite à la perte d'une première source d'alimentation, le mode de fonctionnement dégradé pouvant correspondre à un fonctionnement dégradé du mode de fonctionnement normal ou du mode de fonctionnement de veille.

Ces modes de fonctionnement sont décrits plus en détail dans ce qui suit.

Le dispositif d'alimentation électrique 200 comprend également une première entrée IN1 configurée pour être raccordée électriquement, autrement dit raccordée électriquement à une première source d'alimentation électrique PS1 et une deuxième entrée IN2 configurée pour être raccordée électriquement, autrement dit raccordée électriquement à une deuxième source d'alimentation électrique PS2.

A titre d'exemple nullement limitatif, la première source d'alimentation électrique PS1 est un réseau de distribution électrique (secteur) qui délivre une tension électrique alternative d'alimentation, dont l'amplitude RMS est par exemple égale à 220 Volts ou à 240 Volts, ou à 120 Volts, ces exemples de valeurs n'étant pas limitatifs.

En pratique, le dispositif d'alimentation électrique 200 peut comporter ou être associé à des moyens de conversion de puissance, tels qu'un redresseur, ou un convertisseur de tension, ou un transformateur, ou une alimentation à découpage, ou toute combinaison de ces éléments, qui permettent de transformer la tension délivrée par le réseau de distribution pour obtenir une première tension électrique d'entrée VIN1.

Dans l'exemple illustré, la première source d'alimentation électrique PS1 est fournie au dispositif électrique 200 par un premier transformateur dont un bobinage du secondaire est connecté entre la première entrée IN1 du dispositif d'alimentation électrique 200 et la masse électrique GND du dispositif d'alimentation électrique 200. Ce premier transformateur est couplé à un réseau de distribution électrique tel que décrit.

De préférence, la deuxième source d'alimentation électrique PS2 connectée à la deuxième entrée IN2 du dispositif d'alimentation électrique 200 est un dispositif de stockage d'électricité, tel qu'une batterie composée d'accumulateurs électrochimiques. Cette deuxième source d'alimentation électrique PS2, pouvant être ici qualifiée de secours, délivre entre ses bornes une deuxième tension électrique d'entrée VIN2, dont l'amplitude est de préférence inférieure ou égale à l'amplitude de la tension délivrée par la première source d'alimentation électrique PS1, et dont l'amplitude est également inférieure ou égale à la valeur nominale de la première tension électrique de sortie VOUT1. Par exemple, la deuxième tension électrique d'entrée VIN2 pouvant être délivrée par la deuxième source d'alimentation électrique PS2 est égale à 24 Volts DC ou à 9,6 Volts DC.

De préférence, le dispositif d'alimentation électrique 200 comporte ou est associé à des dispositifs de commutation électrique, tels qu'un ou plusieurs interrupteurs, qui permettent de connecter ou déconnecter sélectivement la première partie P1 du système de charges électriques 100 de la première sortie OUT1. Dit autrement, la première sortie OUT1 est commutable entre un état bloqué empêchant l'alimentation électrique de la première partie P1 du système de charges électriques 100, et au moins un état passant autorisant la première partie P1 du système de charges électriques 100 avec la tension électrique présente entre la première sortie OUT1 et la masse GND.

Dans l'exemple illustré, une batterie formant la deuxième source d'alimentation électrique PS2 est connectée entre la deuxième entrée IN2 du dispositif d'alimentation électrique 200 et la masse électrique GND.

La première entrée IN1 du dispositif d'alimentation électrique 200 est raccordée à la première sortie OUT1 par une première diode D4 qui empêche la circulation du courant depuis la première sortie OUT1 vers la première entrée IN1.

La deuxième entrée IN2 du dispositif d'alimentation électrique 200 est raccordée à la première sortie OUT1 par une deuxième diode D5 (portion de raccordement 206) qui empêche la circulation du courant depuis la première sortie OUT1 vers la deuxième entrée IN2.

Comme la première tension électrique d'entrée VIN1 fournie par la première source d'alimentation électrique PS1 (ici le secteur) est supérieure à la deuxième tension électrique d'entrée fournie par la deuxième source d'alimentation électrique PS2 (ici la batterie), les diodes D4 et D5 placées en sortie de ces sources électriques permettent de faire en sorte que ce soit la première source d'alimentation électrique PS1 qui alimente en priorité la première sortie OUT1 du dispositif d'alimentation électrique 200 lorsque les deux sources électriques sont disponibles.

Avantageusement, un condensateur C3 peut être connecté entre la première sortie OUT1 et la masse GND.

Conformément à des modes de réalisation de l'invention, le dispositif d'alimentation électrique 200 comprend un premier régulateur de tension U1, tel qu'un régulateur linéaire.

Une entrée U1_IN du premier régulateur de tension U1 est configurée pour être raccordée électriquement, autrement dit est raccordée électriquement à la deuxième entrée IN2 du dispositif d'alimentation électrique 200 par une troisième diode D8 (portion de raccordement 208). Ainsi, la troisième diode D8 empêche un retour du courant vers la deuxième entrée IN2 et donc vers la deuxième source d'alimentation électrique PS2 (dans l'exemple illustré à la figure 2 vers la batterie).

Une sortie U1_OUT du premier régulateur de tension U1 est connectée à un point intermédiaire S2 du dispositif d'alimentation électrique 200.

Le premier régulateur de tension U1 est prévu, autrement dit est configuré pour réguler sa tension électrique à sa sortie U1_OUT à une première valeur de consigne, ici de 5,5 Volts.

Dans un mode de réalisation préférentiel, le premier régulateur de tension U1 est relié à la masse électrique GND du dispositif d'alimentation électrique 200 par l'intermédiaire d'une quatrième diode D7, ici orientée de telle sorte que la cathode de la diode D7 est raccordée à la masse GND du dispositif d'alimentation électrique 200, l'anode de la diode D7 étant relié au premier régulateur de tension U1. Dans ce mode de réalisation, le premier régulateur de tension U1 comprend un régulateur de tension linéaire dont la première valeur consigne de sortie est configurée à 5 Volts et dont la quatrième diode D7 permet de rehausser le niveau de la tension électrique de sortie U1_OUT du premier régulateur de tension U1 de 5 Volts à 5,5 Volts.

En variante, le premier régulateur de tension U1 comprend un régulateur de tension ajustable prévu pour réguler sa tension de sortie à une valeur de 5,5 Volts, sans avoir besoin de la diode D7 pour atteindre cette valeur.

Le dispositif d'alimentation électrique 200 comporte également un deuxième régulateur de tension U2, tel qu'un régulateur linéaire.

La deuxième sortie OUT2 du dispositif d'alimentation électrique 200 est configurée pour être raccordée électriquement, autrement dit est raccordée électriquement à une sortie U2_OUT du deuxième régulateur de tension U2.

Une entrée U2_IN du deuxième régulateur de tension U2 est configurée pour être raccordée électriquement, autrement dit est raccordée électriquement au point intermédiaire S2, à une sortie U1_OUT du premier régulateur de tension U1. Le deuxième régulateur de tension U2 est ici aussi relié à la masse électrique GND.

Le deuxième régulateur de tension U2 est prévu, autrement dit est configuré pour réguler sa tension électrique à sa sortie U2_OUT à une deuxième valeur de consigne, ici de 5 Volts.

Optionnellement, comme dans l'exemple illustré, le système d'alimentation électrique 200 peut comprendre une troisième sortie OUT3, la troisième sortie OUT3 étant configurée pour être raccordée électriquement, autrement dit est raccordée électriquement à la deuxième partie du système de charges électriques 100 ou à une troisième partie du système de charge électriques 100. La troisième sortie OUT3 du dispositif d'alimentation électrique 200 est configurée pour délivrer une troisième tension électrique de sortie VOUT3 différente de la première tension électrique de sortie VOUT1 et de la deuxième tension électrique de sortie VOUT2, en particulier inférieure à la deuxième tension électrique de sortie VOUT2.

Par exemple, la troisième tension électrique de sortie VOUT3 est destinée à alimenter certains composants de la deuxième partie P2 du système de charges électriques 100, par exemple certains composants électroniques sensibles, comme un microcontrôleur. La troisième tension électrique de sortie VOUT3 est par exemple une tension continue d'amplitude inférieure à l'amplitude de la deuxième tension de sortie VOUT2. Par exemple, la troisième tension électrique de sortie VOUT3 est une tension électrique stabilisée de 3,3 Volts DC.

Le dispositif d'alimentation électrique 200 comprend alors un troisième régulateur de tension U3, tel qu'un régulateur linéaire. Par exemple, le troisième régulateur de tension U3 est construit de façon similaire au deuxième régulateur de tension U2.

La troisième sortie OUT3 du dispositif d'alimentation électrique 200 est raccordée électriquement, autrement dit est raccordée électriquement à une sortie U3_OUT du troisième régulateur de tension U3. Une entrée U3_IN du troisième régulateur de tension U3 est configurée pour être raccordée électriquement, autrement dit est raccordée électriquement à la deuxième sortie OUT2 du dispositif d'alimentation électrique 200. Le troisième régulateur de tension U3 est ici aussi relié à la masse électrique GND.

Le troisième régulateur de tension U3 est prévu, autrement dit est configuré pour réguler sa tension électrique à sa sortie U3_OUT à une troisième valeur de consigne, ici de 3,3 Volts.

Le troisième régulateur de tension U3 peut être omis dans certaines variantes, de même que la troisième sortie OUT3.

Le dispositif d'alimentation électrique 200 comprend, en outre, une troisième entrée IN3 configurée pour être raccordée électriquement, autrement dit raccordée électriquement à une troisième source d'alimentation électrique PS3. De préférence, la troisième source d'alimentation électrique PS3 est un réseau de distribution électrique (secteur), par exemple le même réseau que la première source d'alimentation électrique PS1. Par exemple, ce réseau de distribution peut être configuré pour délivrer une tension alternative d'alimentation, dont l'amplitude RMS est par exemple égale à 220 Volts ou à 240 Volts, ou à 120 Volts, ces exemples de valeurs n'étant pas limitatifs.

En pratique, à l'instar de ce qui a été décrit pour la première source d'alimentation électrique PS1 raccordée électriquement à la première entrée IN1 du dispositif d'alimentation électrique 200, le dispositif d'alimentation électrique 200 peut comporter ou être associé à des moyens de conversion de puissance additionnels, tels qu'un redresseur, ou un convertisseur de tension, ou un transformateur, ou une alimentation à découpage, ou toute combinaison de ces éléments, qui permettent de transformer la tension délivrée par le réseau de distribution pour obtenir, à partir de la tension électrique délivrée par la troisième source d'alimentation électrique PS3, une troisième tension électrique d'entrée VIN3.

De préférence, la troisième tension électrique d'entrée VIN3 est supérieure à la deuxième tension électrique de sortie VOUT2 et inférieure à la deuxième tension électrique d'entrée VIN2. De préférence, la troisième tension électrique d'entrée VIN3 est, en outre, supérieure, en particulier légèrement supérieure, à la première valeur de consigne du premier régulateur de tension U1. Par exemple, la troisième tension électrique d'entrée VIN3 est égale à 7 Volts DC.

Dans l'exemple illustré, la troisième source d'alimentation électrique PS3 est fournie au dispositif d'alimentation électrique 200 par un deuxième transformateur dont un premier bobinage du secondaire est connecté entre la troisième entrée IN3 du dispositif d'alimentation électrique 200 et la masse électrique GND du dispositif d'alimentation électrique 200. Ce deuxième transformateur est ici couplé à un réseau de distribution électrique tel que décrit ci-dessus.

La troisième entrée IN3 est connectée au point intermédiaire S2 par l'intermédiaire d'une cinquième diode D9, qui empêche tout retour du courant depuis le point intermédiaire S2 vers la troisième entrée IN3.

Comme la troisième tension électrique d'entrée VIN3 issue de la troisième source d'alimentation électrique PS3 est supérieure à la première valeur de consigne du premier régulateur de tension U1, la cinquième diode D9 placée en sortie de la troisième source d'alimentation électrique PS3 fait en sorte que ce soit la troisième source d'alimentation électrique PS3 qui alimente en priorité le deuxième régulateur de tension U2 sur le point intermédiaire S2 du dispositif d'alimentation électrique 200, plutôt que la deuxième source d'alimentation électrique PS2 (par le premier régulateur U1), lorsque les deux sources électriques sont disponibles.

Dans le mode de réalisation de la figure 1, la première entrée IN1 et la première sortie OUT1 ne sont pas raccordées à l'entrée du premier régulateur de tension U1. En d'autres termes, les régulateurs de tension ne peuvent pas être alimentés par la première tension électrique d'entrée VIN1. Le seul moyen d'alimenter électriquement au moins une partie des régulateurs de tension (et donc la deuxième sortie OUT2) à partir du secteur se fait par la troisième source d'alimentation électrique PS3.

Comme expliqué différemment, le dispositif d'alimentation électrique 200 peut être piloté pour fonctionner dans différents modes de fonctionnement, par exemple lorsque le système de charges électriques 100 est en veille pour économiser de l'énergie s'il n'est pas utilisé, ou lorsque l'une des sources d'alimentation électrique PS1 ou PS3 est défaillante ou absente, par exemple en cas de coupure du secteur. En particulier, lorsque le système de charges électriques 100 est en mode veille, la sortie OUT3 est alimentée uniquement par la troisième source d'alimentation électrique PS3. Ce pilotage peut être réalisé par un contrôleur électronique. Ce contrôleur électronique peut, par exemple, appartenir au dispositif d'alimentation électrique 200 ou au système de charges électriques 100 ou à la première partie P1 du système de charges électriques 100 ou à la deuxième partie P2 du système de charges électriques 100.

Dans le mode de fonctionnement normal, la première partie P1 du système de charges électriques 100 et la deuxième partie P2 du système de charges électrique 100 sont alimentées électriquement, respectivement, avec la première tension électrique de sortie VOUT1 et la deuxième tension électrique de sortie VOUT2. Optionnellement, dans le mode de fonctionnement normal, au moins une charge électrique de la deuxième partie P2 du système de charges électriques 100 est alimentée électriquement avec la troisième tension électrique de sortie VOUT3.

Notamment, la première sortie OUT1 reçoit, via la première diode D4, la première tension électrique d'entrée VIN1 à partir de la première entrée IN1.

Le point intermédiaire S2 reçoit la troisième tension électrique d'entrée VIN3, ici égale à 7V. La sortie U1_OUT du premier régulateur de tension U1 est portée au même potentiel et voit donc la troisième tension électrique VIN3. La troisième tension électrique VIN3 est supérieure à la tension de consigne du premier régulateur de tension U1, qui est ici égale à 5,5V. Par conséquent, le premier régulateur de tension U1 agit comme un circuit ouvert et ne délivre pas de courant.

La diode D5 empêche que la tension électrique fournie par la première source d'alimentation PS1 ne puisse être dirigée vers la deuxième entrée IN2 et par exemple charger la batterie choisie comme deuxième source d'alimentation PS2 et empêche le courant issu de la première entrée IN1 d'alimenter électriquement le premier régulateur de tension U1.

Dans le mode de fonctionnement de veille, la première partie P1 du système de charges électriques 100 n'est pas utilisée, et donc n'est plus alimentée électriquement par le dispositif d'alimentation électrique 200. La deuxième partie P2 du système de charges électriques 100 est alimentée électriquement avec la deuxième tension de sortie VOUT2.

Plus précisément, dans le mode de veille, la première tension électrique de sortie VOUT1 est toujours présente sur la première entrée IN1, puisque le réseau de distribution est toujours opérationnel. Mais la première sortie OUT1 se trouve alors commutée vers l'état ouvert, ce qui l'empêche d'être connectée à la première entrée IN1. De plus, la diode D5 empêche le courant issu de la première entrée IN1 d'alimenter le premier régulateur de tension U1.

Le point intermédiaire S2 reçoit la troisième tension électrique d'entrée VIN3, ici égale à 7 Volts. La sortie U1_OUT du premier régulateur de tension U1 est portée au même potentiel et voit donc la troisième tension électrique d'entrée VIN3. La troisième tension électrique d'entrée VIN3 est supérieure à la tension de consigne du premier régulateur de tension U1, qui est ici égale à 5,5 Volts. Par conséquent, le premier régulateur de tension U1 agit comme un circuit ouvert et ne délivre pas de courant.

La deuxième source d'alimentation électrique PS2 n'est donc pas sollicitée pour alimenter électriquement la deuxième partie P2 du système de charges électriques 100. En pratique, dans ce mode de veille, la seule consommation électrique reportée sur la deuxième source d'alimentation électrique PS2, ici la batterie, est due à l'alimentation interne du premier régulateur de tension U1, qui est négligeable. Le premier régulateur de tension U1 ne consomme pas d'énergie électrique et ne cause pas de pertes énergétiques puisqu'il n'est pas sollicité pour alimenter électriquement la deuxième partie P2 du système de charges électriques 100.

Le deuxième régulateur de tension U2 reçoit la troisième tension électrique d'entrée VIN3 égale à 7 Volts sur son entrée U2_IN et, en réponse, délivre la deuxième tension électrique de sortie VOUT2 (ici égale à 5 Volts) sur sa sortie U2_OUT pour alimenter électriquement la deuxième partie P2 du système de charges électriques 100. Comme l'écart entre les deux tensions électriques en entrée (ici égale à 7 Volts) et en sortie (ici égale à 5 Volts) est faible (2 Volts), le deuxième régulateur de tension U2 dissipe peu de puissance.

Dans les modes de fonctionnement dégradé, le secteur cesse de fonctionner. La première source d'alimentation électrique PS1 et la troisième source d'alimentation électrique PS3, qui sont ici toutes les deux dépendantes du secteur, ne fournissent plus aucune tension d'alimentation électrique.

Ainsi, la première tension électrique d'entrée VIN1 disparaît et n'est plus présente sur la première entrée IN1. La troisième tension électrique d'entrée VIN3 n'est plus présente, autrement dit n'est plus fournie sur le point intermédiaire S2 à la sortie U1_OUT du premier régulateur de tension U1.

Deux modes de fonctionnement peuvent être définis, selon que système de charges électriques 100 est en veille ou non pendant que la première source d'alimentation électrique PS1 est défaillante.

Dans le cas où le système de charges électriques 100 est toujours en veille (mode dégradé en veille), le dispositif de commutation se trouve dans l'état ouvert, empêchant la première sortie OUT1 d'être connectée électriquement à la première entrée IN1.

La deuxième source d'alimentation électrique PS2 transmet, via le raccordement 208 et la diode D8, la deuxième tension électrique d'entrée PS2 (ici égale à 9,6 Volts) à l'entrée U1_IN du premier régulateur de tension U1et en réponse, le premier régulateur de tension U1 délivre à sa sortie U1_OUT, sur le point intermédiaire S2, la tension électrique régulée à la première valeur consigne de sortie (ici égale à 5,5 Volts).

La tension électrique régulée à la première valeur consigne de sortie alimente l'entrée U2_IN du deuxième régulateur de tension U2 qui, en réponse, délivre à sa sortie U2_OUT, sur le point intermédiaire S3, la deuxième tension électrique de sortie VOUT2 pour alimenter électriquement la deuxième partie du dispositif domotique via la deuxième sortie OUT2.

Dans le cas où le système de charges électriques 100 n'est plus en veille (mode dégradé simple), le dispositif de commutation est dans l'état fermé et connecte la première sortie OUT1 à la première entrée IN1. Cependant, la première tension électrique d'entrée VIN1 n'est plus présente sur la première entrée IN1 du fait de la défaillance de la première source d'alimentation électrique PS1.

Comme précédemment, la deuxième source d'alimentation électrique PS2 transmet, via le raccordement 208 et la diode D8, la deuxième tension électrique d'entrée VIN2 (ici égale à 9,6 Volts) à l'entrée U1_IN du premier régulateur de tension U1 et en réponse, le premier régulateur de tension U1 délivre à sa sortie U1_OUT, sur le point intermédiaire S2, la tension électrique régulée à la première valeur consigne de sortie (ici égale à 5,5 Volts).

En revanche, la première sortie OUT1 est portée au même potentiel électrique que la deuxième entrée IN1, grâce à la connexion électrique formée par la deuxième diode D5. Ainsi, la première partie P1 du système de charges électriques 100 est alimentée électriquement avec la deuxième tension électrique d'entrée VIN2 (ici égale à 9,6 Volts) fournie par deuxième source d'alimentation électrique PS2, ici la batterie.

Comme la deuxième tension électrique d'entrée VIN2 est inférieure à la valeur nominale de la première tension électrique d'entrée VIN1, la première partie P1 du système de charges électriques 100 ne peut fonctionner que partiellement et/ou dans un mode dégradé. Par exemple, si le système de charges électriques 100 est un actionneur électromécanique dont la première partie est un moteur électrique, alors le moteur électrique alimenté électriquement par la deuxième tension électrique d'entrée VIN2 tourne plus lentement que s'il était alimenté normalement par la première tension électrique d'entrée VIN1. Dans le cas d'une centrale d'alarme domestique où la première partie est un avertisseur sonore, l'avertisseur sonore alimenté par la deuxième tension électrique d'entrée VIN2 émet un signal sonore avec un niveau sonore plus faible que s'il était alimenté normalement par la première tension électrique d'entrée VIN1.

De façon générale, le dispositif d'alimentation électrique 200 permet que, dans les modes de fonctionnement en veille, l'alimentation électrique de la deuxième partie P2 du système de charges électriques 100 soit assurée en priorité par la troisième source d'alimentation électrique PS3, et à défaut sur la deuxième source d'alimentation électrique PS2, bien que la deuxième source d'alimentation électrique PS2 fournisse une deuxième tension électrique d'entrée VIN2 qui est supérieure à la troisième tension électrique d'entrée VIN3 fournie par la troisième source d'alimentation électrique PS3.

En d'autres termes, le premier régulateur de tension U1 fonctionne à la manière d'un interrupteur pour sélectionner automatiquement la source d'alimentation électrique adéquate dans le mode de veille, dans le but de réduire les pertes d'énergie du deuxième régulateur de tension U2, tout en priorisant l'alimentation électrique du système de charges électriques 100 par la première source d'alimentation électriques et la troisième source d'alimentation électriques (ici issues du secteur) afin de ne pas tirer inutilement du courant à partir de la deuxième source d'alimentation électrique PS2 (ici la batterie) lorsque les première et troisième source d'alimentation électrique sont présentes.

En effet, les pertes sont proportionnelles à la tension électrique présente à l'entrée U2_IN du deuxième régulateur de tension U2. Dans les systèmes de charges électriques connus, l'alimentation électrique 24 Volts issue du secteur sert à alimenter électriquement les régulateurs de tension, même dans le mode de veille, alors que la première partie P1 du système de charges électriques 100 est déconnectée de la première source d'alimentation électrique PS1. Dans l'invention, les pertes sont réduites en diminuant le niveau de tension électrique à l'entrée U2_IN du deuxième régulateur de tension U2 dans le mode de veille. En effet, les pertes induites par transformation du 24 Volts en 5 Volts sont plus élevées que les pertes induites par la transformation d'une tension électrique de 7 Volts en 5 Volts.

Grâce à la présente invention, le dispositif d'alimentation électrique 200 permet d'assurer l'alimentation électrique d'un système de charges électriques 100 (en l'occurrence, dans cet exemple, des deux actionneurs électromécaniques 8 et de l'unité électronique de contrôle 10 associé) tout en restant simple et peu coûteux à fabriquer et présentant un rendement énergétique satisfaisant.

En particulier, le dispositif d'alimentation électrique 200 présente un rendement énergétique plus satisfaisant et une consommation résiduelle en mode veille bien moindre que dans les dispositifs d'alimentation électrique connus. Par exemple, la puissance électrique consommée par le dispositif d'alimentation électrique 200 dans un mode de veille reste inférieure à 0,5 Watt ou préférentiellement inférieure ou égale à 0,3 Watt.

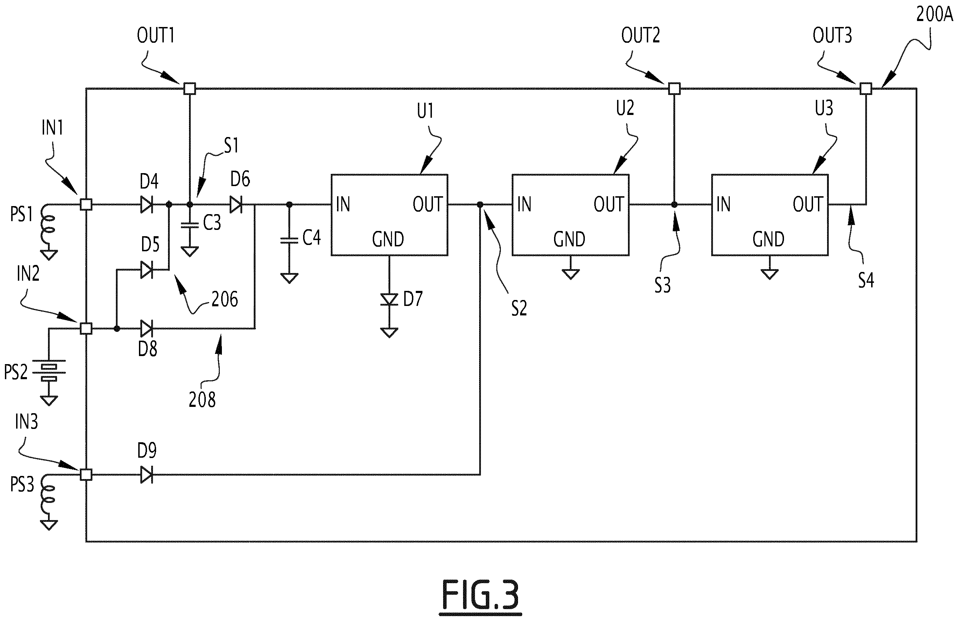

La figure 3 représente un dispositif d'alimentation électrique 200A selon un deuxième mode de réalisation de l'invention. Les éléments de ce dispositif d'alimentation électrique 200A selon ce mode de réalisation qui sont analogues au premier mode de réalisation portent les mêmes références et ne sont pas décrits en détail, dans la mesure où la description ci-dessus peut leur être transposée.

Le dispositif d'alimentation électrique 200A est similaire voire identique au dispositif d'alimentation électrique du premier mode de réalisation 200. En plus, dans le dispositif d'alimentation électrique 200A, l'entrée U1_IN du premier régulateur de tension U1 est connectée à la première sortie OUT1 au moyen d'une connexion électrique 240 comportant une diode additionnelle D6 et un condensateur additionnel C4.

La diode D6 est placée entre la première sortie OUT1 et l'entrée U1_IN du premier régulateur de tension U1 et empêche le courant de remonter depuis le condensateur C4.

Le condensateur C4 est connecté entre l'entrée U1_IN du premier régulateur de tension U1 et la masse GND. Le condensateur C4 constitue une réserve d'énergie qui peut être mobilisée rapidement en cas de défaillance soudaine de l'une quelconque des sources d'alimentation électriques PS1, PS2, PS3. Le condensateur C4 se recharge lorsque la première source d'alimentation électrique PS1est présente.

Cette réserve d'énergie permet par exemple d'assurer que l'électronique du dispositif domotique continue à être alimentée au moins temporairement, même en cas de défaillance de la deuxième source d'alimentation électrique PS2 (ici la batterie). Cela permet par exemple d'assurer qu'une opération sensible, telle que l'écriture d'une information en mémoire, ou l'envoi d'un message, puisse se terminer sans être interrompue par une défaillance d'une des sources d'alimentation électrique.

Mis à part ces différences, la description du dispositif d'alimentation électrique faite en référence à la figure 2 est transposable à ce deuxième mode de réalisation.

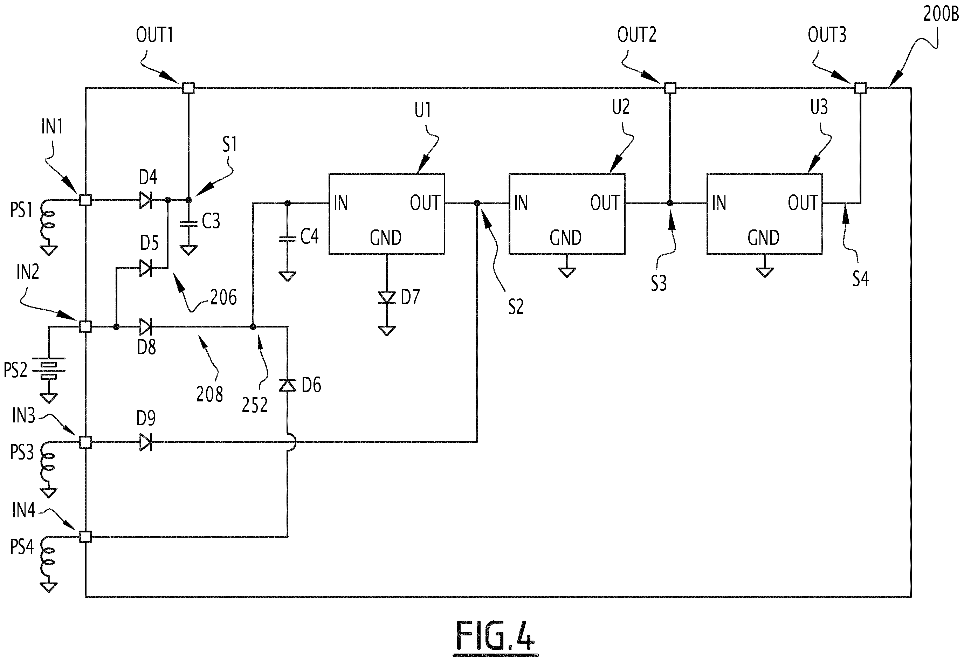

La figure 4 représente un dispositif d'alimentation électrique 200B selon un troisième mode de réalisation de l'invention. Les éléments de ce dispositif d'alimentation électrique 200B selon ce mode de réalisation qui sont analogues au premier mode de réalisation portent les mêmes références et ne sont pas décrits en détail, dans la mesure où la description ci-dessus peut leur être transposée.

Le dispositif d'alimentation électrique 200B est similaire voire identique au dispositif d'alimentation électrique du premier mode de réalisation 200.

Le dispositif d'alimentation électrique 200B comprend, en outre, une quatrième entrée IN4 configurée pour être raccordée électriquement, autrement dit raccordée électriquement à une quatrième source d'alimentation électrique PS4. De préférence, la quatrième source d'alimentation électrique PS4 est un réseau de distribution électrique (secteur), par exemple le même réseau que la première source d'alimentation électrique PS1 et/ou que la troisième source d'alimentation électrique PS3. Par exemple, ce réseau de distribution peut être configuré pour délivrer une tension alternative d'alimentation, dont l'amplitude RMS est par exemple égale à 220 Volts ou à 240 Volts, ou à 120 Volts, ces exemples de valeurs n'étant pas limitatifs.

En pratique, à l'instar de ce qui a été décrit pour la troisième source d'alimentation électrique PS3 raccordée électriquement à la troisième entrée IN3 du dispositif d'alimentation électrique 200, le dispositif d'alimentation électrique 200B peut comporter ou être associé à des moyens de conversion de puissance additionnels, tels qu'un redresseur, ou un convertisseur de tension, ou un transformateur, ou une alimentation à découpage, ou toute combinaison de ces éléments, qui permettent de transformer la tension délivrée par le réseau de distribution pour obtenir, à partir de la tension électrique délivrée par la quatrième source d'alimentation électrique PS4, une quatrième tension électrique d'entrée VIN4.

De préférence, la quatrième tension électrique d'entrée VIN4 est supérieure à la première valeur consigne de sortie du premier régulateur de tension U1 (ici 5,5 Volts). Par exemple, de préférence, la valeur de la quatrième tension électrique d'entrée VIN4 est égale à la valeur de la première tension électrique d'entrée VIN1, ici 24 Volts DC.

Dans l'exemple illustré à la figure 4, la quatrième source d'alimentation électrique PS4 est fournie au dispositif d'alimentation électrique 200B par le deuxième transformateur délivrant la troisième tension électrique d'entrée VIN3 à partir de la troisième entrée IN3, et dont un deuxième bobinage du secondaire est connecté entre la quatrième entrée IN4 du dispositif d'alimentation électrique 200B et la masse électrique GND du dispositif d'alimentation électrique 200B.

En outre, dans le dispositif d'alimentation électrique 200B, l'entrée U1_IN du premier régulateur de tension U1 est configurée pour être raccordée électriquement, autrement dit est raccordée électriquement à la quatrième entrée IN4 par l'intermédiaire d'une diode additionnelle D6, et un condensateur additionnel C4 est connecté entre l'entrée U1_IN du premier régulateur de tension U1 et la masse GND.

L'entrée U1_IN du premier régulateur de tension U1 est connectée à la quatrième entrée IN4 par l'intermédiaire du raccordement 208, auquel elle est ici connectée par un point de raccordement 252. Autrement dit, la quatrième entrée IN4 est connectée à la deuxième source d'alimentation électrique PS2, mais les diodes D6 et D8 empêchent le courant de circuler depuis l'une de ces sources d'alimentations électriques vers l'autre.

Le condensateur C4 constitue une réserve d'énergie qui peut être mobilisée rapidement en cas de défaillance soudaine de l'une quelconque des sources d'alimentation électrique PS1, PS2, PS3. Le condensateur C4 fonctionne de la même façon que joue le même rôle que le condensateur C4 du deuxième mode de réalisation.

La quatrième tension électrique d'entrée VIN4 est utilisée pour recharger le condensateur C4.

Mis à part ces différences, la description du dispositif d'alimentation faite en référence à la figure 4 est transposable à ce troisième mode de réalisation.

De nombreuses modifications peuvent être apportées aux exemples de réalisation décrits précédemment sans sortir du cadre de l'invention défini par les revendications.

## Revendications

1. Dispositif d'alimentation électrique (200; 200A ; 200B) pour alimenter électriquement un système de charges électriques (100), le dispositif d'alimentation électrique (200 ; 200A ; 200B) comprenant au moins :
- une première source d'alimentation électrique (PS1), la première source d'alimentation électrique (PS1) fournissant une première tension électrique d'entrée (VIN1) ;
- une deuxième source d'alimentation électrique (PS2), la deuxième source d'alimentation électrique (PS2) fournissant une deuxième tension électrique d'entrée (VIN2), la deuxième tension électrique d'entrée (VIN2) étant inférieure à la première tension électrique (VIN1) ;
- une troisième source d'alimentation électrique (PS3), la troisième source d'alimentation électrique (PS3) fournissant une troisième tension électrique d'entrée (VIN3), la troisième tension électrique d'entrée (VIN3) étant inférieure à la deuxième tension électrique d'entrée (VIN2) ;
- une première entrée (IN1), la première entrée (IN1) étant raccordée électriquement à la première source d'alimentation électrique (PS1) ;
- une deuxième entrée (IN2), la deuxième entrée (IN2) étant raccordée électriquement à la deuxième source d'alimentation électrique (PS2) ;
- une troisième entrée (IN3), la troisième entrée (IN3) étant raccordée électriquement à la troisième source d'alimentation électrique (PS3) ;
- une première sortie (OUT1), la première sortie (OUT1) étant raccordée électriquement d'une part à la première entrée (IN1) et d'autre part à la deuxième entrée (IN2), la première sortie (OUT1) étant configurée pour alimenter électriquement une première partie (P1) du système de charges électriques (100) avec une première tension électrique de sortie (VOUT1) fournie par la première entrée (IN1) ou par la deuxième entrée (IN2) ;
- une diode de protection (D4, D5), la diode de protection (D4, D5) étant raccordée électriquement d'une part à la première entrée (IN1) et d'autre part à la deuxième entrée (IN2) ;
- une deuxième sortie (OUT2), la deuxième sortie (OUT2) étant configurée pour alimenter électriquement une deuxième partie (P2) du système de charges électriques (100) avec une deuxième tension électrique de sortie (VOUT2), la deuxième tension électrique de sortie (VOUT2) étant inférieure à la troisième tension électrique d'entrée (VIN3) ;
- un premier régulateur de tension (U1), une entrée (U1_IN) du premier régulateur de tension (U1) étant raccordée à la deuxième entrée (IN2), la troisième entrée (IN3) étant raccordée électriquement à une sortie (U1_OUT) du premier régulateur de tension (U1), et
- un deuxième régulateur de tension (U2), une entrée (U2_OUT) du deuxième régulateur de tension (U2) étant raccordée électriquement à la sortie (U1_OUT) du premier régulateur de tension (U1), une sortie (U2_OUT) du deuxième régulateur de tension (U2) étant raccordée électriquement à la deuxième sortie (OUT2) pour alimenter électriquement la deuxième partie (P2) du système de charges électriques (100).

2. Dispositif d'alimentation électrique (200) selon la revendication 1, dans lequel le dispositif d'alimentation électrique est dépourvu de raccordement entre la première sortie (OUT1) et l'entrée (U1_IN) du premier régulateur de tension (U1).

3. Dispositif d'alimentation électrique (200A ; 200B) selon la revendication 1 ou la revendication 2, dans lequel le dispositif d'alimentation électrique comporte une réserve d'énergie (C4) connectée entre l'entrée (U1_IN) du premier régulateur de tension (U1) et une masse électrique (GND) du dispositif d'alimentation électrique.

4. Dispositif d'alimentation électrique (200A) selon la revendication 3, dans lequel l'entrée (U1_IN) du premier régulateur de tension (U1) est connectée à la première sortie (S1) au moyen d'une connexion comportant une diode additionnelle (D6).

5. Dispositif d'alimentation électrique (200B) selon la revendication 3, dans lequel l'alimentation auxiliaire comporte une quatrième entrée (IN4) distincte de la troisième entrée (IN3) et recevant une tension électrique qui est supérieure à la troisième tension d'entrée (VIN3) reçue sur la troisième entrée (IN3), dans lequel l'entrée (U1_IN) du premier régulateur de tension (U1) est connectée à la quatrième entrée (IN4) par l'intermédiaire d'une diode additionnelle (D6).

6. Dispositif d'alimentation électrique (200) selon l'une quelconque des revendications 1 à 5, dans lequel le dispositif d'alimentation électrique comporte une troisième sortie (OUT3) configurée pour alimenter électriquement un ou plusieurs éléments de la deuxième partie (P2) du système domotique, dans lequel le dispositif d'alimentation électrique comporte un troisième régulateur de tension (U3) dont la sortie est raccordée à la deuxième sortie (OUT2) du dispositif d'alimentation électrique et dont l'entrée est raccordée à la sortie du premier régulateur de tension (U1).

7. Dispositif d'alimentation électrique (200 ; 200A ; 200B) selon l'une quelconque des revendications 1 à 6, dans lequel le premier régulateur de tension (U1) est configuré pour fournir à sa sortie une tension électrique régulée à une valeur de consigne, la valeur de consigne étant choisie inférieure à la troisième tension électrique d'entrée (VIN3).

8. Dispositif d'alimentation électrique (200 ; 200A ; 200B) selon l'une quelconque des revendications 1 à 7, dans lequel les régulateurs de tension (U1, U2, U3) sont des régulateurs de tension linéaires.

9. Système domotique, comprenant un système de charges électriques (100) et au moins un dispositif d'alimentation électrique (200 ; 200A ; 200B) selon l'une quelconque des revendications 1 à 8.

10. Système domotique selon la revendication 9, dans lequel le système domotique est une installation de fermeture, d'occultation ou de protection solaire comprenant un écran (4a, 4b) entraîné en déplacement par un actionneur électromécanique alimenté électriquement par le dispositif d'alimentation électrique (200 ; 200A ; 200B).

## Patentansprüche

1. Stromversorgungsvorrichtung (200; 200A; 200B) zum elektrischen Versorgen eines Systems elektrischer Lasten (100), die Stromversorgungsvorrichtung (200; 200A; 200B) mindestens umfassend:
- eine erste Stromversorgungsquelle (PS1), wobei die erste Stromversorgungsquelle (PS1) eine erste elektrische Eingangsspannung (VIN1) bereitstellt;
- eine zweite Stromversorgungsquelle (PS2), wobei die zweite Stromversorgungsquelle (PS2) eine zweite elektrische Eingangsspannung (VIN2) bereitstellt, wobei die zweite elektrische Eingangsspannung (VIN2) niedriger ist als die erste elektrische Spannung (VIN1);
- eine dritte Stromversorgungsquelle (PS3), wobei die dritte Stromversorgungsquelle (PS3) eine dritte elektrische Eingangsspannung (VIN3) bereitstellt, wobei die dritte elektrische Eingangsspannung (VIN3) niedriger ist als die zweite elektrische Eingangsspannung (VIN2);
- einen ersten Eingang (IN1), wobei der erste Eingang (IN1) elektrisch mit der ersten Stromversorgungsquelle (PS1) verbunden ist;
- einen zweiten Eingang (IN2), wobei der zweite Eingang (IN2) elektrisch mit der zweiten Stromversorgungsquelle (PS2) verbunden ist;
- einen dritten Eingang (IN3), wobei der dritte Eingang (IN3) elektrisch mit der dritten Stromversorgungsquelle (PS3) verbunden ist;
- einen ersten Ausgang (OUT1), wobei der erste Ausgang (OUT1) einerseits mit dem ersten Eingang (IN1) und andererseits mit dem zweiten Eingang (IN2) elektrisch verbunden ist, wobei der erste Ausgang (OUT1) konfiguriert ist, um einen ersten Teil (P1) des Systems elektrischer Lasten (100) mit einer ersten elektrischen Ausgangsspannung (VOUT1) elektrisch zu versorgen, die von dem ersten Eingang (IN1) oder von dem zweiten Eingang (IN2) bereitgestellt wird;
- eine Schutzdiode (D4, D5), wobei die Schutzdiode (D4, D5) elektrisch einerseits mit dem ersten Eingang (IN1) und andererseits mit dem zweiten Eingang (IN2) verbunden ist;
- einen zweiten Ausgang (OUT2), wobei der zweite Ausgang (OUT2) konfiguriert ist, um einen zweiten Teil (P2) des Systems elektrischer Lasten (100) mit einer zweiten elektrischen Ausgangsspannung (VOUT2) zu versorgen, wobei die zweite elektrische Ausgangsspannung (VOUT2) niedriger ist als die dritte elektrische Eingangsspannung (VIN3);
- einen ersten Spannungsregler (U1), wobei ein Eingang (U1_IN) des ersten Spannungsreglers (U1) mit dem zweiten Eingang (IN2) verbunden ist, wobei der dritte Eingang (IN3) elektrisch mit einem Ausgang (U1_OUT) des ersten Spannungsreglers (U1) verbunden ist, und
- einen zweiten Spannungsregler (U2), wobei ein Eingang (U2_OUT) des zweiten Spannungsreglers (U2) elektrisch mit dem Ausgang (U1_OUT) des ersten Spannungsreglers (U1) verbunden ist, ein Ausgang (U2_OUT) des zweiten Spannungsreglers (U2) elektrisch mit dem zweiten Ausgang (OUT2) verbunden ist, um den zweiten Teil (P2) des Systems elektrischer Lasten (100) elektrisch zu versorgen.

2. Stromversorgungsvorrichtung (200) nach Anspruch 1, wobei die Stromversorgungsvorrichtung über keine Verbindung zwischen dem ersten Ausgang (OUT1) und dem Eingang (U1_IN) des ersten Spannungsreglers (U1) verfügt.

3. Stromversorgungsvorrichtung (200A; 200B) nach Anspruch 1 oder Anspruch 2, wobei die Stromversorgungsvorrichtung eine Energiereserve (C4) umfasst, die zwischen dem Eingang (U1_IN) des ersten Spannungsreglers (U1) und einer elektrischen Masse (GND) der Stromversorgungsvorrichtung verbunden ist.

4. Stromversorgungsvorrichtung (200A) nach Anspruch 3, wobei der Eingang (U1_IN) des ersten Spannungsreglers (U1) mittels einer Verbindung mit dem ersten Ausgang (S1) verbunden ist, die eine zusätzliche Diode (D6) umfasst.

5. Stromversorgungsvorrichtung (200B) nach Anspruch 3, wobei die Hilfsversorgung einen vierten Eingang (IN4) umfasst, der sich von dem dritten Eingang (IN3) unterscheidet und eine elektrische Spannung empfängt, die höher ist als die dritte Eingangsspannung (VIN3) ist, die an dem dritten Eingang (IN3) empfangen wird, wobei der Eingang (U1_IN) des ersten Spannungsreglers (U1) über eine zusätzliche Diode (D6) mit dem vierten Eingang (IN4) verbunden ist.

6. Stromversorgungsvorrichtung (200) nach einem der Ansprüche 1 bis 5, wobei die Stromversorgungsvorrichtung einen dritten Ausgang (OUT3) umfasst, der konfiguriert ist, um ein oder mehrere Elemente des zweiten Teils (P2) des Domotiksystems elektrisch zu versorgen, wobei die Stromversorgungsvorrichtung einen dritten Spannungsregler (U3) umfasst, dessen Ausgang mit dem zweiten Ausgang (OUT2) der Stromversorgungsvorrichtung verbunden ist und dessen Eingang mit dem Ausgang des ersten Spannungsreglers (U1) verbunden ist.

7. Stromversorgungsvorrichtung (200; 200A; 200B) nach einem der Ansprüche 1 bis 6, wobei der erste Spannungsregler (U1) konfiguriert ist, um an seinem Ausgang eine auf einen Sollwert geregelte elektrische Spannung bereitzustellen, wobei der Sollwert niedriger als die dritte elektrische Eingangsspannung (VIN3) gewählt ist.

8. Stromversorgungsvorrichtung (200; 200A; 200B) nach einem der Ansprüche 1 bis 7, wobei die Spannungsregler (U1, U2, U3) lineare Spannungsregler sind.

9. Domotiksystem, umfassend ein System elektrischer Lasten (100) und mindestens eine Stromversorgungsvorrichtung (200; 200A; 200B) nach einem der Ansprüche 1 bis 8.

10. Domotiksystem nach Anspruch 9, wobei das Domotiksystem eine Schließ-, Verdunkelungs- oder Sonnenschutzanlage ist, umfassend einen Schirm (4a, 4b), der von einem elektromechanischen Aktuator in Bewegung versetzt wird, der von der Stromversorgungsvorrichtung (200; 200A; 200B) elektrisch versorgt wird.

## Claims

1. A power supply device (200; 200A; 200B) for supplying power to an electrical load system (100), the power supply device (200; 200A; 200B) comprising at least:
- a first power supply (PS1), the first power supply (PS1) providing a first input voltage (VIN1);
- a second power supply (PS2), the second power supply (PS2) providing a second input voltage (VIN2), the second input voltage (VIN2) being lower than the first voltage (VIN1);
- a third power supply (PS3), the third power supply (PS3) providing a third input voltage (VIN3), the third input voltage (VIN3) being lower than the second input voltage (VIN2);
- a first input (IN1), the first input (IN1) being electrically connected to the first power supply (PS1);
- a second input (IN2), the second input (IN2) being electrically connected to the second power supply (PS2);
- a third input (IN3), the third input (IN3) being electrically connected to the third power supply (PS3);
- a first output (OUT1), the first output (OUT1) being electrically connected, on the one hand, to the first input (IN1) and, on the other hand, to the second input (IN2), the first output (OUT1) being configured to electrically supply a first part (P1) of the electrical load system (100) with a first output voltage (VOUT1) supplied by the first input (IN1) or by the second input (IN2);
- a protection diode (D4, D5), the protection diode (D4, D5) being electrically connected on the one hand to the first input (IN1) and on the other hand to the second input (IN2);
- a second output (OUT2), the second output (OUT2) being configured to electrically supply a second part (P2) of the electrical load system (100) with a second output voltage (VOUT2), the second output voltage (VOUT2) being lower than the third input voltage (VIN3);
- a first voltage regulator (U1), an input (U1_IN) of the first voltage regulator (U1) being connected to the second input (IN2), the third input (IN3) being electrically connected to an output (U1_OUT) of the first voltage regulator (U1), and
- a second voltage regulator (U2), an input (U2_OUT) of the second voltage regulator (U2) being electrically connected to the output (U1_OUT) of the first voltage regulator (U1), an output (U2_OUT) of the second voltage regulator (U2) being electrically connected to the second output (OUT2) in order to supply electrical power to the second part (P2) of the electrical load system (100).

2. The power supply device (200) according to claim 1, wherein the power supply device has no connection between the first output (OUT1) and the input (U1_IN) of the first voltage regulator (U1).

3. The power supply device (200A; 200B) according to claim 1 or claim 2, wherein the power supply device comprises an energy receiver (C4) connected between the input (U1_IN) of the first voltage regulator (U1) and an electrical ground (GND) of the power supply device.

4. The power supply device (200A) according to claim 3, wherein the input (U1_IN) of the first voltage regulator (U1) is connected to the first output (S1) by means of a connection comprising an additional diode (D6).

5. The power supply device (200B) according to claim 3, wherein the auxiliary power supply comprises a fourth input (IN4) distinct from the third input (IN3) and receiving an electric voltage which is higher than the third input voltage (VIN3) received at the third input (IN3), wherein the input (U1_IN) of the first voltage regulator (U1) is connected to the fourth input (IN4) via an additional diode (D6).

6. The power supply device (200) according to any one of claims 1 to 5, wherein the power supply device comprises a third output (OUT3) configured to supply power to one or more elements of the second part (P2) of the home automation system, wherein the power supply device comprises a third voltage regulator (U3) whose output is connected to the second output (OUT2) of the power supply device and whose input is connected to the output of the first voltage regulator (U1).

7. The power supply device (200; 200A; 200B) according to any one of claims 1 to 6, wherein the first voltage regulator (U1) is configured to supply at its output an voltage regulated to a setpoint value, the setpoint value being chosen to be less than the third electrical input voltage (VIN3).

8. The power supply device (200; 200A; 200B) according to any one of claims 1 to 7, wherein the voltage regulators (U1, U2, U3) are linear voltage regulators.

9. A home automation system, comprising an electrical load system (100) and at least one electrical power supply device (200; 200A; 200B) according to any one of claims 1 to 8.

10. The home automation system according to claim 9, in which the home automation system is a closure, occultation or solar protection installation comprising a screen (4a, 4b) moved by an electromechanical actuator supplied electrically by the power supply device (200; 200A; 200B).
